# EUROPÄISCHE PATENTSCHRIFT

(11) **EP 2 357 058 B1**
(45) Veröffentlichungstag und Bekanntmachung des Hinweises auf die Patenterteilung: **12.09.2012**
(21) Anmeldenummer: 11154148.8
(22) Anmeldetag: 11.02.2011
(51) Int. Cl.: B23Q 1/00, B23Q 3/18

(54) **Spannsystem, insbesondere Nullpunktspannsystem**
Clamping system particularly zero point clamping system
Système de serrage, notamment système de serrage au point zéro

(30) Priorität: 12.02.2010 DE 102010007924
(43) Veröffentlichungstag der Anmeldung: 17.08.2011
(73) Patentinhaber: Schunk GmbH & Co. KG Spann- und Greiftechnik, 74348 Lauffen am Neckar (DE)
(72) Erfinder: Schräder, Philipp, 88512 Mengen (DE); Kleiner, Markus, 88605 Messkirch (DE); Koch, Alexander, 88512 Mengen (DE); LeGuin, Hermann, 88279 Amtzell (DE)
(74) Vertreter: Dreiss

(56) Entgegenhaltungen:
- EP-A2- 1 886 751
- DE-A1- 4 116 103
- DE-U1- 29 804 730

## Beschreibung

### Beschreibung

Die Erfindung betrifft ein Spannsystem, insbesondere ein Nullpunktspannsystem, mit einem eine Spannaufnahme und Spannmitteln aufweisenden Spannmodul und einem einen Spannbolzen aufweisenden Trägerteil, wobei der Spannbolzen in die Spannaufnahme einführbar und die Spannmittel in radialer Richtung in eine Verriegelungslage derart verlagerbar sind, dass sie in einer radial inneren Lage gegen den in der Spannaufnahme vorhandenen Spannbolzen wirken und das Trägerteil in axialer Richtung gegen das Spannmodul beaufschlagt wird.

Aus der EP 0 936 025 B1 ist bekannt geworden, eine Zentrierung zwischen dem Spannmodul und dem Trägerteil am Außenumfang des Spannmoduls vorzusehen. Die Zentrierung kann dabei insbesondere in Form eines Ringes ausgebildet sein, der in eine konische Nut eingreift.

Aus der EP 1 886 751 B1 ist eine Zentrierung derart bekannt, dass die Spannaufnahme zur Aufnahme des Spannbolzens leicht konisch ausgebildet ist.

Aus der DE 41 16 103 A1 außerdem bekannt, eine Zentrierung über zylindrische Zentrierrollen zu erreichen, die in prismatische Nuten eingelegt sind.

Die DE 298 04 730 U1 zeigt darüber hinaus eine Spanneinrichtung, bei der eine Verdrehsicherung über Einzugsbolzen an der Palette realisiert ist.

Der Erfindung liegt die Aufgabe zugrunde, ein Spannsystem bereitzustellen, bei dem eine Zentrierung und/oder eine Rotationsausrichtung auf einfache Art und Weise bereitgestellt wird, die funktionssicher arbeitet. Insbesondere soll eine Überbestimmtheit des Systems vermieden werden, so dass ein definiertes und genau wiederholbares Spannen des Trägerteils am Spannmodul möglich wird.

Diese Aufgabe wird durch ein Spannsystem mit den Merkmalen des Anspruchs 1 gelöst. Ein solches Spannsystem sieht folglich vor, dass am Spannmodul oder am Trägerteil wenigstens ein Wirkabschnitt vorgesehen ist, der schräg zur jeweiligen Mittellängsachse verlaufend angeordnet ist und in einer Ebene liegt, die tangential an einem um die Mittellängsachse der Spannaufnahme und/oder des Spannbolzens verlaufenden Kreises anliegt, und dass am Trägerteil oder Spannmodul wenigstens ein in axialer Richtung überstehender Gegenkörper mit einer gekrümmten Oberfläche derart vorgesehen ist, dass in der Verriegelungslage diegekrümmte Oberfläche des wenigstens einen Gegenkörpers gegen den jeweiligen Wirkabschnitt wirkt. Bei der Ebene handelt es sich vorzugsweise um eine gerade Ebene; allerdings kann die Ebene auch als zumindest geringfügig gekrümmte oder ballige Ebene ausgebildet sein. Die gekrümmte Oberfläche des Gegenkörpers, die gegen den insbesondere ebenen Wirkabschnitt wirkt, wird dabei vorzugsweise elastisch bedingt verformt. Zu der elastischen Verformung kommt es deshalb, weil aufgrund der vergleichsweise geringen Berührfläche zwischen der gekrümmten Oberfläche des Gegenkörpers und dem Wirkabschnitt in der Verriegelungslage vergleichsweise hohe Kräfte wirken. Eine solche elastische Verformung hat den wesentlichen Vorteil, dass das Trägerteil in der Verriegelungslage spielpasspositioniert am Spannmodul angeordnet werden kann. Die vorzugsweise mehreren Wirkabschnitte können, ebenso wie vorzugsweise mehreren vorzusehenden Gegenkörper, einstückig mit dem Spannmodul oder dem Trägerteil ausgebildet sein. Erfindungsgemäß ist auch denkbar, dass die Wirkabschnitte und/oder die Gegenkörper als separate Bauteile ausgebildet sind, die entsprechend am Spannmodul oder Trägerteil befestigt sind.

Im jeweiligen Querschnitt schließt der wenigstens eine Wirkabschnitt insbesondere mit der zugehörigen Längsachse einen Winkel im Bereich vom 15° bis 60°, und insbesondere im Bereich von 30° bis 45° ein.

Aufgrund der Anordnung des wenigstens einen Wirkabschnitts einerseits schräg zur Mittellängsachse und andererseits tangential um die Mittellängsachse kann beim Aufeinanderzubewegen von Spannmodul und Trägerteil eine Zentrierung der beiden Teile erreicht werden. Der jeweilige Gegenkörper kann dabei am jeweiligen, ihm zugeordneten Wirkabschnitt wenigstens bedingt entlang gleiten.

Dabei ist vorteilhaft, wenn der jeweilige Wirkabschnitt und der zugehörige wenigstens eine Gegenkörper derart ausgebildet sind, dass die gekrümmte Oberfläche des jeweiligen Gegenkörpers gegen den jeweiligen Wirkabschnitt einen punktuellen oder entlang einer Linie verlaufenden Berührkontakt aufweisen. Hierdurch werden sehr hohe Punkt-oder Flächenpressungen erreicht, welche zu einer geeigneten elastischen Verformung der Gegenkörper führen. Das Trägerteil kann hierdurch in der Verriegelungslage unter entsprechender Vorspannung spielpositioniert am Spannmodul angeordnet sein.

Vorteilhaft ist, wenn bei Vorsehen mehrerer Gegenkörper und Wirkabschnitte die Berührkontakte in einer Ebene liegen, die senkrecht zur jeweiligen Mittellängsachse verläuft. Insbesondere liegen die zur Anlagen an der Wirkfläche kommenden Abschnitte der gekrümmten Oberfläche in einer senkrecht zur jeweiligen Mittellängsachse verlaufenden Ebene.

Eine weitere Ausführungsform sieht vor, dass die Wirkabschnitte am radial äußeren Randbereich des Spannmoduls oder Trägerteils und/oder die Gegenkörper am radial äußeren Randbereich des Trägerteils oder Spannmoduls vorgesehen sind. Das Spannmodul sowie das Trägerteil können hierbei in Draufsicht eine runde Kontur haben. Die Wirkabschnitte sind dabei insbesondere durch Materialabtrag im Kantenbereich realisiert. Die Gegenkörper sind derart angeordnet, dass sie in der Verriegelungslage gegen die schräg verlaufenden Wirkabschnitte wirken.

Die Wirkabschnitte können dabei insbesondere von einer durchgängigen, ebenen Fläche oder von wenigstens zwei Wirkteilabschnitten gebildet werden, die in einer gemeinsamen Ebene liegen und durch eine Materialausnehmung, beispielsweise durch eine Nut, voneinander getrennt sind.

Die Gegenkörper können ihrerseits kugelförmig oder zylinderstiftförmig ausgebildet sein oder zylinderstiftartige Abschnitte aufweisen, die ebenfalls durch Materialausnehmungen, beispielsweise durch Ringnuten, voneinander getrennt sind.

Durch eine solche Ausbildung der Wirkabschnitte und der Gegenkörper können geeignete Paarungen realisiert werden. Beispielsweise wird der Wirkabschnitt von einer durchgängigen Fläche gebildet. Ein zugehöriger Gegenkörper kann dann beispielsweise zylinderstiftförmig ausgebildet sein oder lediglich zwei zylinderstiftartige Abschnitte vorsehen. Denkbar ist auch, dass mit einem Wirkabschnitt, der eine durchgängige Fläche aufweist, zwei kugelförmig ausgebildete Gegenkörper zusammenwirken. Andererseits ist ebenfalls denkbar, dass der Wirkabschnitt wenigstens zwei Wirkteilabschnitte vorsieht, die mit einem zylinderstiftförmigen Gegenkörper zusammenwirken. Aufgrund der Materialausnehmungen zwischen den Zentrierträgerabschnitten kommt der zylinderstiftförmige Gegenkörper dann entlang zweier Linienabschnitten am Wirkabschnitt zur Auflage.

Wie bereits erwähnt, kann vorteilhaft sein, wenn in der Verriegelungslage jeweils zwei kugelförmige Gegenkörper gegen einen Wirkabschnitt wirken.

Eine weitere vorteilhafte Ausgestaltung der Erfindung sieht vor, dass um die Mittellängsachse des Spannmoduls am Spannmodul unter gleichen und/oder sich wiederholenden Winkelabständen mehrere Wirkabschnitte oder Gegenkörper und/oder um die Mittellängsachse des Trägerteils am Trägerteil mehrere Gegenkörper oder Wirkabschnitte vorgesehen sind. Vorzugsweise sind insgesamt drei Wirkabschnitte vorgesehen, die jeweils einen gleichen Winkelabstand zueinander vorsehen. Entsprechend sind insbesondere drei Gegenkörper, die zylinderstiftförmig ausgebildet sind oder zylinderstiftartige Abschnitte aufweisen, vorgesehen. Ferner ist denkbar, dass mit jedem Wirkabschnitt zwei kugelförmige Gegenkörper zusammenwirken, so dass dann insgesamt sechs Gegenkörper mit drei Wirkabschnitten zusammenwirken.

Eine weitere vorteilhafte Ausbildung sieht vor, dass die Wirkabschnitte in jeweils einer Ebene liegen, die die Mittellängsachse jeweils unter einem Winkel von 15° bis 60° und insbesondere im Bereich von 30° bis 45° schneidet. Die Ebenen der Wirkabschnitte bilden dann insbesondere eine gerade Pyramide mit einer dreieckigen Grundfläche.

Zur Befestigung der Gegenkörper ist denkbar, dass das Trägerteil oder das Spannmodul Passaussparungen aufweist, in welche die Gegenkörper, sofern sie als separate Bauteile ausgebildet sind, eingepresst sind. Das Ausbilden der Gegenkörper als separate Bauteile hat den Vorteil, dass die Gegenkörper aus einem anderen Material sein können, als das Trägerteil oder das Gehäuse des Spannmoduls. Das Material der Gegenkörper kann, wie bereits erwähnt, so ausgebildet sein, dass es sich in der Verriegelungslage bedingt elastisch verformt.

Um die Nachgiebigkeit zu erhöhen, ist denkbar, dass im Bereich neben den Passaussparungen Materialaussparungen derart vorgesehen sind, dass die die Passaussparungen umgebende Wandung sich in der Verriegelungslage wenigstens bedingt ebenfalls elastisch verformen kann.

Weitere Einzelheiten und vorteilhafte Ausgestaltungen der Erfindung sind der nachfolgenden Beschreibung zu entnehmen, anhand derer das in den Figuren dargestellte Ausführungsbeispiel näher beschrieben und erläutert ist.

Es zeigen:
Figur 1 ein Spannmodul in perspektivischer Ansicht;
Figur 2 das Spannmodul gemäß Figur 1 in Draufsicht;
Figur 3 die Unteransicht eines Trägerteils ohne Spannbolzen und Gegenkörper;
Figur 4 das Trägerteil gemäß Figur 3 in perspektivischer Unteransicht;
Figur 5 ein Spannsystem umfassend das Spannmodul gemäß Figur 1 und das Trägerteil gemäß Figur 4;
Figur 6 das Spannsystem gemäß Figur 5 im verriegelten Zustand im Querschnitt;
Figur 7 eine Einzelteildarstellung eines Gegenkörpers;
Figur 8 die Unteransicht eines weiteren Trägerteils ohne Spannbolzen und Gegenkörper;
Figur 9 die perspektivische Ansicht eines weiteren Spannmoduls;
Figur 10 die perspektivische Unteransicht eines dritten Trägerteils;
Figur 11 ein Spannsystem gemäß Fig. 1 mit dem Trägerteil gemäß Figur 10 und
Figur 12 die Unteransicht eines vierten Trägerteils ohne Spannbolzen und Gegenkörper.

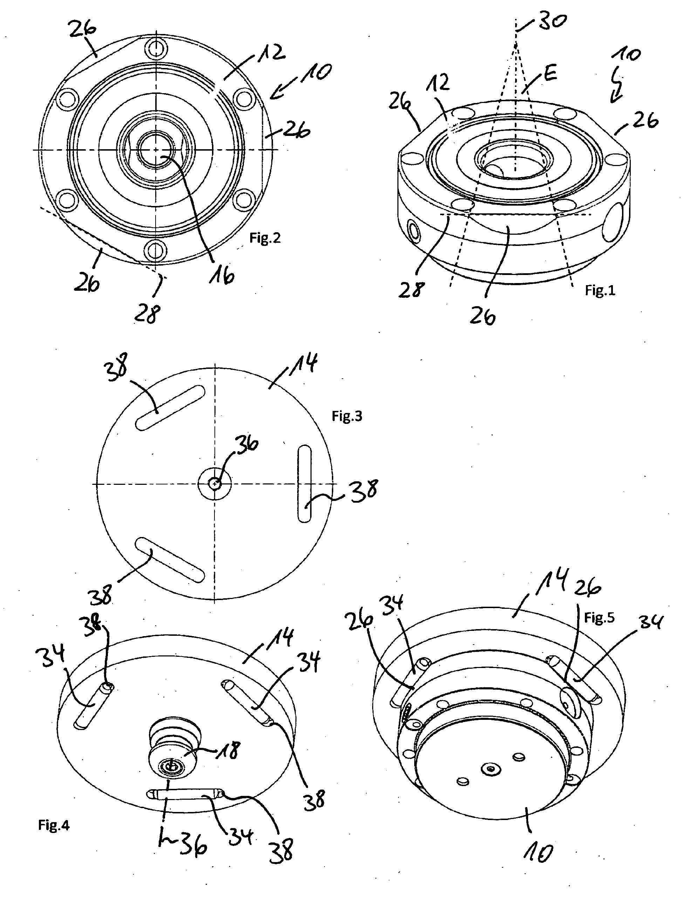

Das in Figuren 1 und 2 gezeigte Spannmodul 10 weist an seiner Oberseite eine Auflagefläche 12 zur Auflage der Unterseite eines Trägerteils 14 auf, wie es beispielsweise in Figuren 3 und 4 gezeigt ist. Das Spannmodul 10 sieht eine zentrale Spannaufnahme 16 vor, in welche ein Spannbolzen 18, der gemäß Figur 4 am Trägerteil 14 befestigt ist, einführbar ist.

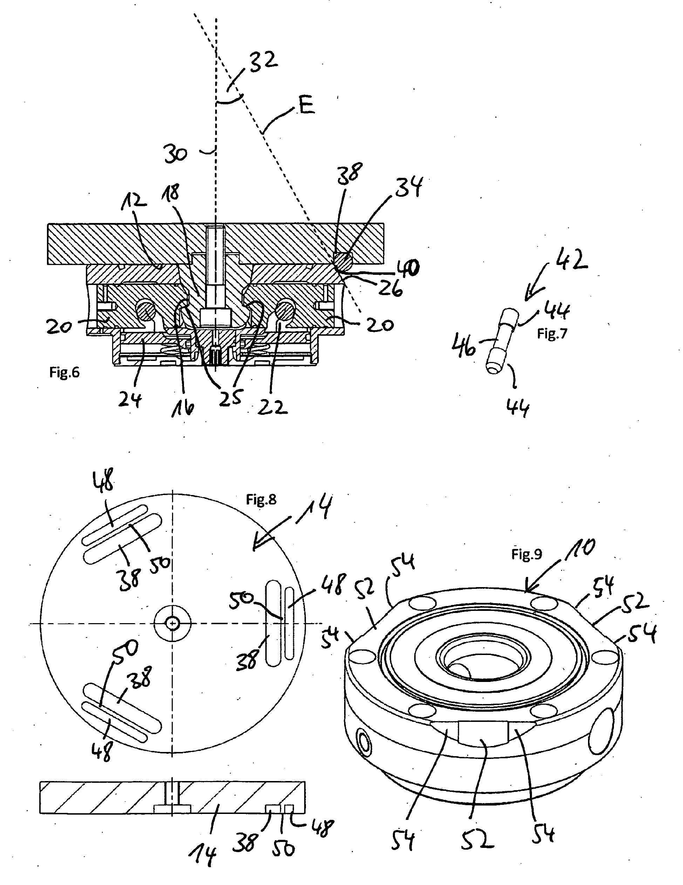

Wie aus dem Querschnitt gemäß Figur 6 deutlich wird, sieht das Spannmodul 10 zudem in radialer Richtung verlagerbare Spannmittel 20, die hier als Spannschieber ausgebildet sind, vor. Die Spannmittel 20 können über eine Mechanik 22, die über einen axial betätigbaren Kolben 24 betätigbar ist, in radialer Richtung aufeinander zu oder voneinander weg bewegt werden. Anstelle von Spannmitteln 20 in Form von Schiebern ist gemäß der Erfindung auch denkbar, dass Spannmittel in Form von Backen oder Kugeln entsprechend Verwendung finden können.

In der Figur 6 ist die radial innere Verriegelungslage der Spannmittel 20 dargestellt, in welcher sie über konische Kontaktflächen 25 gegen den trägerteilseitigen Spannbolzen 18 wirken und dadurch das Trägerteil 14 in axialer Richtung gegen die Auflagefläche 12 des Spannmoduls 10 beaufschlagen.

Wie insbesondere aus den Figuren 1 und 2 deutlich wird, weist das Spannmodul 10 in Draufsicht eine kreisrunde Kontur auf. Am Spannmodul 10 sind dabei insgesamt drei Wirkabschnitte in Form von Zentrierabschnitten 26 vorgesehen. Die Zentrierabschnitte 26 liegen dabei jeweils in einer Ebene, die zum einen durch eine Tangentiale 28 definiert wird, die auf einem Kreis um die Mittellängsachse 30 des Spannmoduls 10 liegt. Zum anderen wird die jeweilige Ebene dadurch definiert, dass sie schräg zur Mittellängsachse 30 verläuft, oder mit der Mittellängsachse 30 einen Winkel 32 einschließt.

Der Winkel 32 liegt dabei vorzugsweise im Bereich von 15° bis 60° und insbesondere im Bereich von 25° bis 45° und insbesondere im Bereich von 30°.

Die drei Zentrierabschnitte 26 sind dabei am radial äußeren Bereich des Spannmoduls 10 angeordnet und werden jeweils von einer durchgängigen Fläche gebildet. Sie sind ferner um die Mittellängsachse 30 des Spannmoduls 10 unter gleichen Winkelabständen zueinander angeordnet, wobei die Mittelachsen der einzelnen Zentrierabschnitte jeweils einen Abstand von 120° zueinander haben. Hierdurch ergibt sich eine symmetrische Anordnung der jeweils gleich groß ausgebildeten Zentrierabschnitte. Die drei Ebenen, in denen die Zentrierabschnitte 26 liegen, bilden eine gerade Pyramide mit einer dreieckigen Grundfläche.

Auf der der Auflagefläche 12 zugewandten Unterseite des Trägerteils 14 sind, wie aus Figuren 4 und 5 deutlich wird, insgesamt drei Gegenkörper in Form von Zentrierkörpern 34 vorgesehen. In der Verriegelungslage, wie sie in den Figuren 5 und 6 dargestellt ist, wirken diese Zentrierkörper 34 mit den Zentrierabschnitten 26 zusammen.

Die Zentrierkörper 34 sind als Zylinderstifte ausgebildet. Die Zylinderstifte liegen jeweils auf einer Tangentialen eines Kreises um die Mittellängsachse 36 des Trägerteils 14. Die zylinderförmigen Zentrierkörper 34 sind dabei in nutartigen Passaussparungen 38, wie sie in Figur 3 deutlich zu erkennen sind, durch Einpressen am Trägerteil 14 befestigt. Figur 3 zeigt dabei lediglich die Passaussparungen 38, ohne die Zentrierkörper 34.

Anstelle eines Einpressens der Zentrierkörper 34 in die Passaussparung 38 ist denkbar, dass die Zentrierkörper auf andere Art und Weise positionsgenau am Trägerteil befestigt werden. Ebenfalls ist denkbar, dass die Zentrierkörper einstückig mit dem Trägerteil ausgebildet sind.

In der Verriegelungslage liegen die Zentrierkörper 34 mit ihrer gekrümmten Oberfläche entlang einer Linie 40, die parallel zu deren Längsrichtung verläuft, an den jeweiligen Zentrierabschnitten 26 an. Dies wird insbesondere aus dem Schnitt gemäß Figur 6 deutlich.

Ein Fügen der Trägerplatte 14 mit dem Spannmodul 10 erfolgt also derart, dass der Spannbolzen 18 in die Spannaufnahme 16 eingreift. Beim weiteren Fügen erfolgt eine Zentrierung zwischen der Trägerplatte 14 und dem Spannmodul 10 derart, dass die Zentrierkörper 34 an den Zentrierabschnitten 26 entlang gleiten. Beim Verriegeln der Trägerplatte 14 durch radiales Nachinnenbewegen der Spannmittel 20 wird dann das Trägerteil 14 gegen das Spannmodul 12 beaufschlagt, wobei die Zentrierkörper 34 an den schräg verlaufenden Zentrierabschnitten 26 mit ihrer gekrümmten Oberfläche aufliegen und aufgrund der hohen Flächenpressung wenigstens bedingt elastisch verformt werden. Aufgrund der elastischen Verformung wird eine vorteilhafte Spielpasspositionierung erzielt. Die Zentrierung ist dabei nicht nur querkräftefrei und hochgenau, sondern sichert auch gegen eine Verdrehung. Anstelle eines zylinderförmigen Zentrierkörpers 34, wie er in den Figuren 4, 5 und 6 dargestellt ist, ist denkbar, einen Zentrierkörper 42 vorzusehen, wie er in Figur 7 gezeigt ist. Ein derartiger Zentrierkörper 42 weist zwei zylinderförmige Abschnitte 44 auf, die durch eine Materialausnehmung 46 voneinander beabstandet sind. Das Vorsehen eines derartigen Zentrierkörpers 42 hat den Vorteil, dass die Auflagefläche des Zentrierkörpers 42 an dem jeweiligen Zentrierabschnitt 26 aufgrund der Materialausnehmung verringert wird und damit die Flächenpressung zunimmt. Einhergeht eine entsprechende elastische Deformierung des Zylinderkörpers 42.

Figur 8 zeigt eine alternative Ausgestaltung eines Trägerteils 14. Neben den Passaussparungen 38 sind parallel dazu verlaufend, radial außen liegend Materialaussparungen 48 vorgesehen. Durch derartige Materialaussparungen 48 kann erreicht werden, dass nicht nur der jeweilige Zentrierkörper 34, der in der Passaussparung 38 angeordnet wird, in der Verriegelungslage elastisch verformt wird. Zusätzlich kann eine elastische Verformung des Materials, oder des verbleibenden Stegs 50, zwischen der Passaussparung 38 und der Materialaussparung 48 auftreten.

Bei einer anderen Ausführungsform eines Spannmoduls 10, wie es in Figur 9 dargestellt ist, sind die Zentrierabschnitte 26 so ausgebildet, dass sie im mittleren Bereich eine Materialausnehmung 52 vorsehen. Bei Verwendung von zylinderförmigen Zentrierkörpern 56, wie sie in Figuren 4 und 5 dargestellt sind, hat dies den Vorteil, dass die Flächenpressung aufgrund der geringeren Anlagefläche zwischen Zentrierkörper 34 und den jeweiligen Zentrierabschnitten oder den Wirkteilabschnitten 54 erhöht wird.

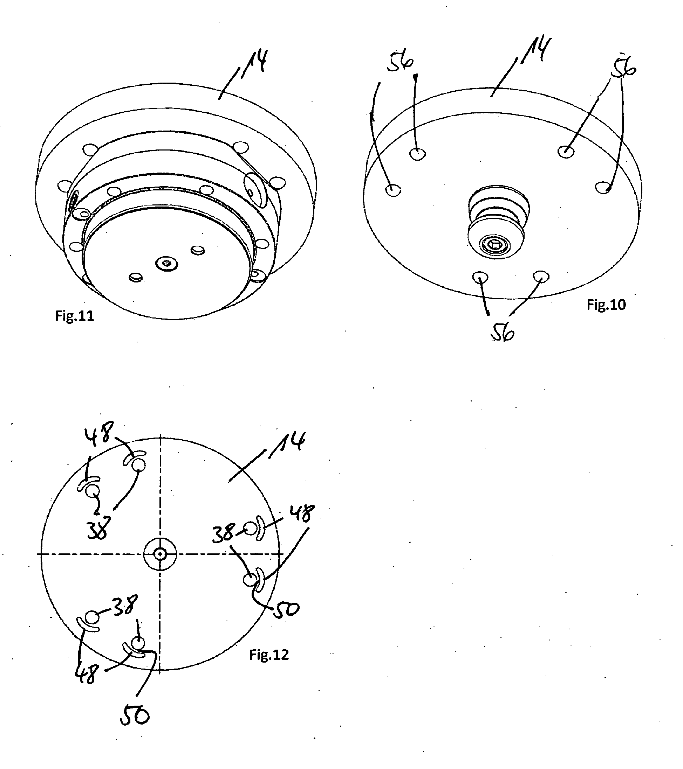

In den Figuren 10 und 11 ist eine weitere alternative Ausführung eines Trägerteils 14 dargestellt. Das Trägerteil 14 sieht hier insgesamt sechs kugelförmige Zentrierkörper 56 vor, die paarweise angeordnet sind und jeweils gegen einen Zentrierabschnitt 26, oder bei einer Ausführungsform gemäß Figur 9 jeweils einzeln an einem zugehörigen Wirkteilabschnitt 54, in der Verriegelungslage zum Anliegen kommen. Derartige kugelförmige Zentrierkörper 56 haben den Vorteil, dass sie nur punktuell an den jeweils zugehörigen Zentrierabschnitten 26 oder Wirkteilabschnitten 54 zum Anliegen kommen. Hierdurch wird die Flächenpressung entsprechend erhöht.

Die kugelförmigen Zentrierkörper 56 sind dabei insbesondere in trägerteilseitigen Passaussparungen durch Einpressen festgesetzt.

In der Figur 12 sind neben den Passaussparungen 38 für die kugelförmigen Zentrierkörper 56 radial außen liegend sichelförmige Materialaussparungen 48, entsprechend den Materialaussparungen 48 gemäß Figur 8, vorgesehen. Hierdurch wird erreicht, dass der zwischen Aussparungen 38 und 48 verbleibende Steg 50 gegebenenfalls wenigstens bedingt elastisch nachgiebig ist.

## Patentansprüche

1. Spannsystem, insbesondere Nullpunktspannsystem, mit einem eine Spannaufnahme (16) und Spannmitteln (20) aufweisenden Spannmodul (10) und einem einen Spannbolzen (18) aufweisenden Trägerteil (14), wobei der Spannbolzen (18) in die Spannaufnahme (16) einführbar und die Spannmittel (20) in radialer Richtung in eine Verriegelungslage derart verlagerbar sind, dass sie in einer radial inneren Lage gegen den in der Spannaufnahme (16) vorhandenen Spannbolzen (18) wirken und das Trägerteil (14) in axialer Richtung gegen das Spannmodul (10) beaufschlagt wird, **dadurch gekennzeichnet, dass** am Spannmodul (10) oder am Trägerteil (14) wenigstens ein Wirkabschnitt (26) vorgesehen ist, der schräg zur Mittellängsachse (30, 36) der Spannaufnahme (16) oder des Spannbolzens (18) verlaufend angeordnet ist und in einer Ebene liegt, die tangential an einem um die Mittellängsachse (30, 36) der Spannaufnahme (16) und/oder des Spannbolzens (18) verlaufenden Kreises anliegt, und dass am Trägerteil (14) oder Spannmodul (10) wenigstens ein in axialer Richtung überstehender Gegenkörper (34, 42, 56) mit einer gekrümmten Oberfläche derart vorgesehen ist, dass in der Verriegelungslage die gekrümmte Oberfläche des wenigstens einen Gegenkörpers (34, 42, 56) gegen den jeweiligen Wirkabschnitt (26) wirkt.

2. Spannsystem nach Anspruch 1, **dadurch gekennzeichnet, dass** der jeweilige Wirkabschnitt (26) und der zugehörige wenigstens eine Gegenkörper (34, 42, 56) derart ausgebildet sind, dass die gekrümmte Oberfläche des jeweiligen Gegenkörpers (34, 42, 56) gegen den jeweiligen Wirkabschnitt (26) einen punktuellen oder entlang einer Linie (40) verlaufenden Berührkontakt aufweisen.

3. Spannsystem nach Anspruch 2, **dadurch gekennzeichnet, dass** bei Vorsehen mehrerer Gegenkörper und Wirkabschnitte die Berührkontakte in einer Ebene liegen, die senkrecht zur jeweiligen Mittellängsachse (30, 36) verläuft.

4. Spannsystem nach einem der vorstehenden Ansprüche, **dadurch gekennzeichnet, dass** ein Wirkabschnitt (26) von einer durchgängigen Fläche oder von wenigstens zwei Zentrierteilanschnitten (54) gebildet wird, die durch eine Materialausnehmung (52) voneinander getrennt sind.

5. Spannsystem nach einem der vorstehenden Ansprüche, **dadurch gekennzeichnet, dass** der Gegenkörper (34, 42, 56) kugelförmig oder zylinderstiftförmig ausgebildet ist oder zylinderstiftartige Abschnitte (44), die durch Materialausnehmungen (46) voneinander getrennt sind, aufweist.

6. Spannsystem nach einem der vorstehenden Ansprüche, **dadurch gekennzeichnet, dass** in der Verrieglungslage jeweils zwei kugelförmige Gegenkörper (56) gegen einen Wirkabschnitt (26) wirken.

7. Spannsystem nach einem der vorstehenden Ansprüche, **dadurch gekennzeichnet, dass** um die Mittellängsachse (30) des Spannmoduls (10) am Spannmodul (10) unter gleichen und/oder sich wiederholenden Winkelabständen mehrere Wirkabschnitte (26) oder Gegenkörper (34, 42, 56) und/oder um die Mittellängsachse (36) des Trägerteils (14) am Trägerteil (14) mehrere Gegenkörper (34, 42, 56) oder Wirkabschnitte (26) vorgesehen sind.

8. Spannsystem nach einem der vorstehenden Ansprüche, **dadurch gekennzeichnet, dass** mehrere Wirkabschnitte (26) vorgesehen sind, die in jeweils einer Ebene (E) liegen, die die Mittellängsachse jeweils unter einem Winkel (32) von 15° bis 60° und insbesondere im Bereich von 30 - 45° schneiden.

9. Spannsystem nach einem der vorstehenden Ansprüche, **dadurch gekennzeichnet, dass** das Trägerteil (14) oder das Spannmodul (10) Passaussparungen (38) aufweist, in welche die Gegenköper (34, 42, 56) eingepresst sind.

10. Spannsystem nach Anspruch 9 **dadurch gekennzeichnet, dass** im Bereich neben den Passaussparungen (38) Materialaussparungen (48) derart vorgesehen sind, dass die die Passaussparungen (38) umgebende Wandung (50) sich in der Verriegelungslage wenigstens bedingt elastisch verformen kann.

## Claims

1. A clamping system, in particular a zero point clamping system, having a clamping module (10) with a clamping receptacle (16) and clamping means (20), and having a holder part (14) with a clamping bolt (18), the clamping bolt (18) being capable of being introduced into the clamping receptacle (16) and the clamping means (20) being displaceable in the radial direction into a locking position in such a manner that they act in a radially inner position counter to the clamping bolt (18) that is present in the clamping receptacle (16), and the holder part (14) is urged in the axial direction against the clamping module (10), **characterized in that** on the clamping module (10) or on the holder part (14), at last one active portion (26) is provided, which is disposed extending obliquely to the central longitudinal axis (30, 36) of the clamping receptacle (16) or of the clamping bolt (18) and is located in a plane that is at a tangent to a circle extending around the central longitudinal axis (30, 36) of the clamping receptacle (16) and/or of the clamping bolt (18); and that at least one counterpart body (34, 42, 56) protruding past the holder part (14) or clamping module (10) in the axial direction is provided with a curved surface such that in the locking position, the curved surface of the at least one counterpart body (34, 42, 56) acts counter to the respective active portion (26).

2. The clamping system according to claim 1, **characterized in that** the respective active portion (26) and the at least one counterpart body (34, 42, 56) belonging to it are embodied such that the curved surface of the respective counterpart body (34, 42, 56) and the respective active portion (26) are in touch contact at a point or along a line (40).

3. The clamping system according to claim 2, **characterized in that** if a plurality of counterpart bodies and active portions are provided, the touch contacts are in a plane that is perpendicular to the respective central longitudinal axis (30, 36).

4. The clamping system according to one of the foregoing claims, **characterized in that** an active portion (26) is formed by one continuous surface or by at least two centering-part notches (54), which are separated from one another by a material recess (52).

5. The clamping system according to one of the foregoing claims, **characterized in that** the counterpart body (34, 42, 56) is embodied in spherical or cylindrical pinlike form or has cylindrical pinlike portions (44) which are separated from one another by material reliefs (46).

6. The clamping system according to one of the foregoing claims, **characterized in that** in the locking position, two spherical counterpart bodies (56) each act counter to one active portion (26).

7. The clamping system according to one of the foregoing claims, **characterized in that** a plurality of active portions (26) or counterpart bodies (34, 42, 56) are provided on the clamping module (10) at identical and/or repeating angular spacings around the central longitudinal axis (30) of the clamping module (10), and/or a plurality of counterpart bodies (34, 42, 5 6) or active portions (26) are provided on the holder part (14) around the central longitudinal axis (36) of the holder part (14).

8. The clamping system according to one of the foregoing claims, **characterized in that** a plurality of active portions (26) are provided, which are each located in a respective plane (E), which planes intersect the central longitudinal axis at an angle (32) of 15° to 60° and in particular in the range of 30° to 45°.

9. The clamping system according to one of the foregoing claims, **characterized in that** the holder part (14) or the clamping module (10) has locating recesses (38) into which the counterpart bodies (34, 42, 56) are press-fitted.

10. The clamping system according to claim 9, **characterized in that** in the region next to the locating recesses (38), material recesses (48) are provided in such a manner that in the locking position, the wall (50) surrounding the locating recesses (38) can, at least conditionally, deform elastically.

## Revendications

1. Système de serrage, en particulier système de serrage au point zéro, comprenant un module de serrage (10) présentant un logement de serrage (16) et des moyens de serrage (20) et comprenant une pièce de support (14) présentant un boulon de serrage (18), le boulon de serrage (18) pouvant être introduit dans le logement de serrage (16) et les moyens de serrage (20) pouvant être déplacés dans le sens radial dans une position de verrouillage, de façon à agir, dans une position intérieure radiale, contre le boulon de serrage (18) présent dans le logement de serrage (16) et de façon à ce que la pièce de support (14) soit sollicitée dans le sens axial contre le module de serrage (10), **caractérisé en ce qu'**il est prévu sur le module de serrage (10) ou sur la pièce de support (14) au moins une section active (26) qui est agencée inclinée par rapport à l'axe longitudinal médian (30, 36) du logement de serrage (16) ou du boulon de serrage (18) et qui repose dans un plan qui se situe tangentiellement sur un cercle s'étendant autour de l'axe longitudinal médian (30, 36) du logement de serrage (16) et/ou du boulon de serrage (18), et **en ce qu'**il est prévu, sur la pièce de support (14) ou sur le module de serrage (10) au moins un élément opposé (34, 42, 56) en saillie dans le sens axial avec une surface courbée de façon à ce que, en position de verrouillage, la surface courbée du au moins un élément opposé (34, 42, 56) agisse contre la section active correspondante (26).

2. Système de serrage selon la revendication 1, **caractérisé en ce que** la section active (26) et le au moins un élément opposé correspondant (34, 42, 56) sont réalisés de telle sorte que la surface courbée de l'élément opposé correspondant (34, 42, 56) présente, contre la section active correspondante (26), un contact ponctuel ou s'étendant le long d'une ligne (40).

3. Système de serrage selon la revendication 2, **caractérisé en ce que**, du fait de la prévision de plusieurs éléments opposés et plusieurs sections actives, les contacts se situent dans un plan qui s'étend perpendiculairement à l'axe longitudinal médian correspondant (30, 36).

4. Système de serrage selon l'une des revendications précédentes, **caractérisé en ce qu'**une section active (26) est formée par une surface continue ou par au moins deux sections partielles de centrage (54) qui sont séparées l'une de l'autre par un évidement de matériau (52).

5. Système de serrage selon une ou plusieurs des revendications précédentes, **caractérisé en ce que** l'élément opposé (34, 42, 56) est réalisé sous forme de sphère ou sous la forme d'une goupille cylindrique ou bien présente des sections de type goupille cylindrique (44) qui sont séparées les unes des autres par des évidements de matériau (46).

6. Système de serrage selon l'une des revendications précédentes, **caractérisé en ce que**, en position de verrouillage, deux éléments opposés sphériques (56) agissent contre une section active (26).

7. Système de serrage selon l'une des revendications précédentes, **caractérisé en ce qu'**il est prévu, autour de l'axe longitudinal médian (30) du module de serrage (10) au niveau du module de serrage (10) à des distances angulaires identiques et/ou régulières, plusieurs sections actives (26) ou éléments opposés (34, 42, 56) et/ou, autour de l'axe longitudinal médian (36) de la pièce de support (14) au niveau de la pièce de support, (14) plusieurs éléments opposés (34, 42, 56) ou sections actives (26).

8. Système de serrage selon l'une des revendications précédentes, **caractérisé en ce qu'**il est prévu plusieurs sections actives (26) qui se situent dans un plan (E), lequel plan coupe l'axe longitudinal médian suivant un angle (32) compris entre 15° et 60°, et en particulier dans la plage comprise entre 30° et 45°.

9. Système de serrage selon l'une des revendications précédentes, **caractérisé en ce que** la pièce de support (14) ou le module de serrage (10) présente des évidements de passage (38) dans lesquels on enfonce les éléments opposés (34, 42, 56).

10. Système de serrage selon la revendication 9, **caractérisé en ce qu'**il est prévu, dans la zone à côté des évidements de passage (38) des évidements de matériau (48) de façon à ce que la paroi (50) entourant les évidements de passage (38) puisse être déformée élastiquement en position de verrouillage.
